(19) Europäisches Patentamt
European Patent Office
Office européen des brevets

(11) **EP 3 293 562 B1**

(12) **EUROPEAN PATENT SPECIFICATION**

(45) Date of publication and mention
of the grant of the patent:
**15.01.2020 Bulletin 2020/03**

(51) Int Cl.:
*G02B 27/01* (2006.01)  *B60K 35/00* (2006.01)
*B60R 11/02* (2006.01)  *G02B 17/08* (2006.01)

(21) Application number: **16813966.5**

(22) Date of filing: **23.06.2016**

(86) International application number:
**PCT/JP2016/003028**

(87) International publication number:
**WO 2016/208194 (29.12.2016 Gazette 2016/52)**

(54) **HEAD-UP DISPLAY AND MOVING BODY EQUIPPED WITH HEAD-UP DISPLAY**

HEADUP-ANZEIGE UND MIT DER HEADUP-ANZEIGE AUSGESTATTETER, BEWEGLICHER KÖRPER

AFFICHAGE TÊTE HAUTE ET CORPS EN DÉPLACEMENT ÉQUIPÉ D'UN AFFICHAGE TÊTE HAUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2015 JP 2015128942**

(43) Date of publication of application:
**14.03.2018 Bulletin 2018/11**

(73) Proprietor: **Panasonic Intellectual Property Management Co., Ltd.**
**Osaka-shi, Osaka 540-6207 (JP)**

(72) Inventors:
• **KUZUHARA, Satoshi**
 **Osaka-shi, Osaka 540-6207 (JP)**
• **SUEYOSHI, Masafumi**
 **Osaka-shi, Osaka 540-6207 (JP)**
• **OKAYAMA, Hiroaki**
 **Osaka-shi, Osaka 540-6207 (JP)**
• **HAYASHI, Katsuhiko**
 **Osaka-shi, Osaka 540-6207 (JP)**

(74) Representative: **Eisenführ Speiser**
**Patentanwälte Rechtsanwälte PartGmbB**
**Postfach 10 60 78**
**28060 Bremen (DE)**

(56) References cited:
JP-A- H08 286 140    JP-A- 2009 150 947
JP-A- 2010 256 867    JP-A- 2014 130 269
US-A- 5 436 763     US-A1- 2009 160 736
US-A1- 2014 049 819   US-A1- 2014 126 045

**Description**

TECHNICAL FIELD

The present disclosure relates to a head-up display that projects an image on a reflective member having transparency to cause an observer to visually recognize a virtual image.

BACKGROUND ART

US 5,436,763 discloses a virtual image display optical system. The system includes an image source, a combiner, and a relay group. The relay group is a catatrioptic relay group that includes a reflective optical element, and a refractive lens group that includes at least one doublet and a diffractive lens. For some applications, the catatrioptric relay group may be replaced by a hybrid refractive-diffractive relay group, thus eliminating the reflective element. The diffractive optical element of the hybrid optical element is encoded on one side of a lens. The hybrid optical element forms a refractive/diffractive achromat to provide for primary chromatic aberration correction. The refractive lens group is also an achromat to provide for chromatic aberration correction. Power distribution between the hybrid optical element and the refractive lens group is such that secondary chromatic aberration of the refractive lens group is balanced out by the secondary chromatic aberration of the hybrid optical element. The diffractive optical element is designed using higher order wavefront correction terms encoded on one side to reduce spherochromatism and secondary spherochromatism of the relay group. One lens may have a conic or an aspherical surface to further reduce the spherochromatism and secondary spherochromatism. Asymmetrical aberration and distortion resulting from the combiner are compensated for by the reflective optical element. To minimize the residual aberration of the optical system, the reflective optical element is tilted and/or decentered. The system has a relatively wide spectral bandwidth, has good image quality, has simple optics, is ultracompact, and provides wide field coverage and large field overlaying.

US 2009/160736 A1 discloses a head-up display apparatus for vehicles including a light source, a scanning unit for scanning light from the light source two-dimensionally, a screen to focus the scanned light on, and a projection unit for projecting the image on the screen. The apparatus further includes a moving mechanism for changing the position of the screen.

US 2014/126045 A1 discloses a magnification optical system which forms an enlarged image of an object. It includes a refractive optical system including a plurality of lens groups; and a mirror train including a curved mirror, arranged in this order from an object side, a first focus structure configured to move the respective lens groups of the refractive optical system by different amounts along a normal line of a conjugate surface on the object side, and a second focus structure configured to move the respective lens groups along the normal line of the conjugate surface on the object side by different amounts from those of the first focus structure.

In order o reduce the volume and the weight of an entire device and to improve operability by constituting an image producing means and a part of optical system or only a part of optical system as a moving part and moving the moving part, thereby performing pupil alignment and the adjustment of a pupil distance, it is proposed in JP H08 286140 A that the part of eccentric mirrors being a 2nd optical member is set in a housing, the moving part constituted of an eccentric mirror being a 1st optical member and an LCD is set in a housing, which is constituted to move in a specified direction. Since the optical system for a left eye is constituted similarly to the optical system for a right eye, the exit pupils of the optical systems for the right and the left eyes are moved in an opposite direction each other in a direction nearly orthogonal to an observation direction by respectively moving the moving part constituted of the LCD and the mirror and corresponding members for the left eye symmetrically in a specified direction. Thus, the pupil distance of a twin-lens type HMD is easily adjusted.

US 2014/049819 A1 relates to an optical projection system for a display and more particularly to an optical projection system for a head-up display with improved light efficiency.

PTL 1 discloses a display device that can perform stereoscopic display. The display device includes a display panel, an image-formation optical system, and an image-formation position variable unit. The display panel is an image forming unit that forms an image. The image-formation optical system forms the image formed by the image forming unit. The image-formation position variable unit is provided on an incident side of the image-formation optical system, and varies a position of the image formed by the image-formation optical system. The image-formation position variable unit includes a relay optical system that forms an intermediate image between the image forming unit and the image-formation optical system. The relay optical system varies the position of the intermediate image, thereby varying positions of a plurality of images sequentially switched by the image forming unit.

Citation List

Patent Literature

PTL 1: Unexamined Japanese Patent Publication No. 2008-180759

## SUMMARY OF THE INVENTION

A head-up display of the present disclosure is defined in claim 1.

The head-up display of the present disclosure can vary a display position of the virtual image while reducing a size.

## BRIEF DESCRIPTION OF DRAWINGS

FIG. 1 is a schematic diagram illustrating a moving body equipped with a head-up display according to the present disclosure.
FIG. 2 is a schematic diagram of an optical cross section illustrating a configuration of a head-up display according to a first exemplary embodiment.
FIG. 3 is a schematic diagram of an optical cross section illustrating a configuration of a head-up display according to a second exemplary embodiment.
FIG. 4 is a schematic diagram of an optical cross section illustrating a configuration of a head-up display according to a third exemplary embodiment.
FIG. 5 is a view illustrating eccentricity data of each plane in an optical system of Example 1 (corresponding to the first exemplary embodiment).
FIG. 6 is a view illustrating a radius of curvature of each plane in the optical system of Example 1 (corresponding to the first exemplary embodiment).
FIG. 7 is a view illustrating shape data of a free curved surface in the optical system of Example 1 (corresponding to the first exemplary embodiment).
FIG. 8 is a view illustrating the shape data of the free curved surface in the optical system of Example 1 (corresponding to the first exemplary embodiment).
FIG. 9 is a view illustrating the shape data of the free curved surface in the optical system of Example 1 (corresponding to the first exemplary embodiment).
FIG. 10 is a view illustrating eccentricity data of each plane in an optical system of Example 2 (corresponding to the first exemplary embodiment).
FIG. 11 is a view illustrating a radius of curvature of each plane in the optical system of Example 2 (corresponding to the first exemplary embodiment).
FIG. 12 is a view illustrating shape data of a free curved surface in the optical system of Example 2 (corresponding to the first exemplary embodiment).
FIG. 13 is a view illustrating the shape data of the free curved surface in the optical system of Example 2 (corresponding to the first exemplary embodiment).
FIG. 14 is a view illustrating the shape data of the free curved surface in the optical system of Example 2 (corresponding to the first exemplary embodiment).
FIG. 15 is a view illustrating data of the head-up display of Examples 1 and 2.

## DESCRIPTION OF EMBODIMENTS

Hereinafter, exemplary embodiments will be described in detail with reference to the drawings as appropriate. However, detailed description more than necessary may be omitted. For example, detailed description of a known matter or repetitive description of a substantially identical configuration may be omitted. This is to avoid the following description from becoming unnecessarily redundant, and to ease understanding of those skilled in the art.

Note that the attached drawings and the following description are provided for those skilled in the art to fully understand the present disclosure, and are not intended to limit the subject matter as described in the appended claims.

(First exemplary embodiment)

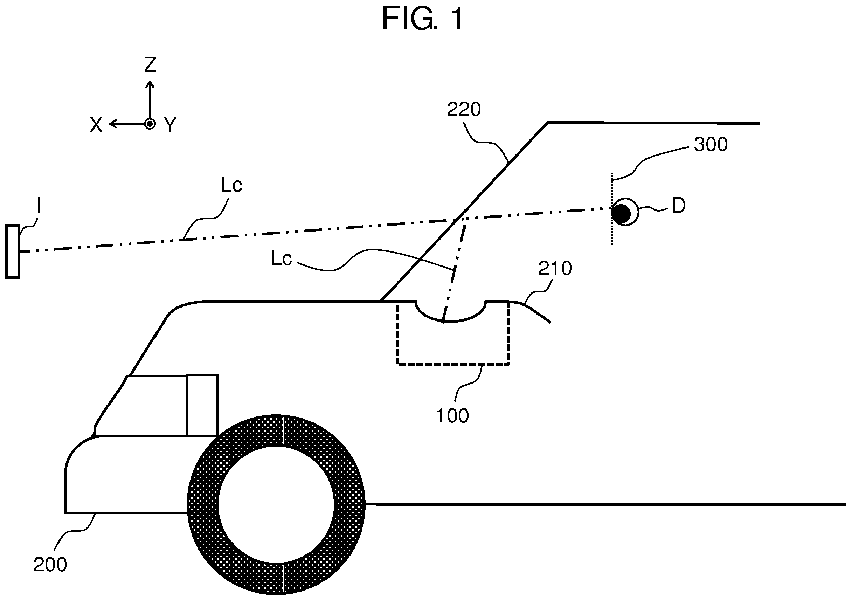

A first exemplary embodiment will be described below with reference to FIGS. 1 to 4.

[1-1. Configuration]

[1-1-1. Overall configuration of head-up display]

Specific exemplary embodiments and examples of head-up display 100 of the present disclosure will be described below with reference to the drawings.

FIG. 1 is a schematic diagram illustrating a cross section of vehicle 200 equipped with head-up display 100 according to the present disclosure. As illustrated in FIG. 1, head-up display 100 is disposed inside dashboard 210 below windshield 220 of vehicle 200. Observer D recognizes an image projected from head-up display 100 as virtual image I.

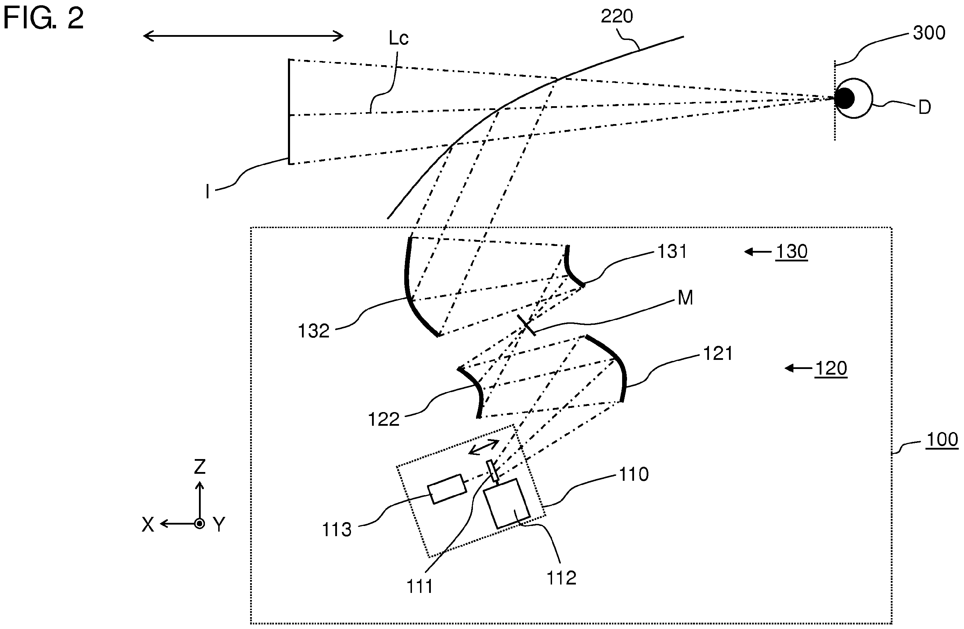

FIG. 2 is a schematic diagram of an optical cross section illustrating head-up display 100 of the first exemplary embodiment. As illustrated in FIG. 2, head-up display 100 includes display device 110, relay optical system 120, and projection optical system 130. Head-up display 100 reflects the image displayed on display device 110 through windshield 220, and guides the image to viewpoint region 300 (sometimes referred to as an eye-box) of observer D, thereby presenting virtual image I to observer D.

At this point, it is assumed that reference ray Lc is an optical path of a display image of screen 111, the optical path constituting a center of virtual image I. Actually, reference ray Lc visually recognized by observer D reaches observer D from display device 110 through an optical system. For this reason, a ray, which corresponds to reference ray Lc output from the center of virtual image I and reaches observer D from display device 110, is also referred to as reference ray Lc. Additionally, optical paths corresponding to these rays are also referred to as reference ray Lc. At this point, it is assumed that a viewpoint of observer D is located in a center of viewpoint region 300.

Display device 110 includes screen 111, driving unit 112 that drives screen 111, and scanning laser 113. In display device 110, a controller such as a microcomputer (not illustrated) controls display image information. Various pieces of information such as road traffic navigation display, a distance to a vehicle ahead, a remaining battery charge of a vehicle, and a current vehicle speed can be displayed as the display image information. A projector or a scanning laser, which projects the image on screen 111, is used as a light source for display device 110. Scanning laser 113 scans a surface of screen 111 to form a display image. Driving unit 112 is a driving device that moves screen 111 along reference ray Lc. Driving unit 112 moves screen 111 along reference ray Lc, which allows adjustment of a distance from observer D to virtual image I. For example, when screen 111 is moved away from relay optical system 120, virtual image I can be moved away from observer D.

Driving unit 112 moves according to a scanning position in screen 111 of scanning laser 113. Therefore, virtual image I can be drawn on any plane regardless of an output angle of reference ray Lc of screen 111. For example, virtual image I can be drawn on a plane inclined with respect to observer D by synchronization between a drawing cycle of scanning laser 113 and a swing cycle of screen 111. Screen 111 is moved back and forth at several tens of hertz in a direction of reference ray Lc, which allows stereoscopic display of virtual image I.

A moving amount of intermediate image M is larger than a moving amount of screen 111. This is because lateral magnification $\beta$ of relay optical system 120 has magnification effect larger than 1. At this point, the moving amount of intermediate image M is moved $\beta^2$ times the moving amount of screen 111. Aerial image M is formed in air, but not formed in a projection plane that diffuses and reflects light.

Driving unit 112 not only moves screen 111 in an optical axis direction but also rotates or inclines screen 111.

Relay optical system 120 includes first mirror 121 and second mirror 122. Relay optical system 120 reflects the image displayed on screen 111 of display device 110 through first mirror 121, and further reflects the image through second mirror 122, thereby forming intermediate image M. At this point, intermediate image M is formed while being magnified larger than the image displayed on screen 111. That is, large intermediate image M can be obtained even if the small image is displayed on screen 111. Therefore, the size of screen 111 can be reduced. Additionally, large intermediate image M can reduce magnifying power in projection optical system 130. Therefore, positive power of the fourth mirror of projection optical system 130 can be weakened, and a screen distortion can be suppressed. Specifically, it is desirable that the power of relay optical system 120 is set so as to satisfy the following Condition (1).

$$1.4 < \beta < 4.0 \cdots (1)$$

where $\beta$ is lateral magnification of relay optical system 120.

It is not necessary to form intermediate image M at an intermediate image position as a good point, but a spherical aberration, a coma aberration, a field curvature, and an astigmatism may be generated.

Projection optical system 130 includes third mirror 131 and fourth mirror 132. Projection optical system 130 reflects intermediate image M formed by relay optical system 120 through third mirror 131, and reflects intermediate image M through fourth mirror 132, thereby projecting intermediate image M on windshield 220. Aerial image M is formed in air, but not formed in a projection plane that diffuses and reflects light.

[1-1-2. Disposition configuration of projection optical system, relay optical system, and display device]

In head-up display 100 of the first exemplary embodiment, display device 110 is disposed below relay optical system 120 and projection optical system 130. A display surface of screen 111 of display device 110 is oriented toward first mirror 121. At this point, it is desirable that reference ray Lc output from display device 110 is inclined with respect to the display surface of screen 111. This enables prevention of stray light, which is caused by reflection of external light entering a casing on the display surface of display device 110. Screen 111 of display device 110 is made of an optical member having a diffusion property. Scanning laser 113 that projects the image on screen 111 is disposed at the back of screen 111.

As illustrated in FIG. 2, first mirror 121 is disposed above display device 110 and on an observer D side. A reflection surface of first mirror 121 is eccentric such that the image displayed by display device 110 is reflected in second mirror 122. Second mirror 122 is disposed below first mirror 121 and on a virtual image I side. A reflection surface of second mirror 122 is eccentric such that the ray reflected from first mirror 121 is reflected in third mirror 131.

Third mirror 131 is disposed above first mirror 121. A reflection surface of third mirror 131 is eccentric such that the ray reflected from second mirror 122 is reflected in fourth mirror 132. Fourth mirror 132 is disposed on the virtual image I side with respect to third mirror 131. A reflection surface of fourth mirror 132 is eccentric such that the ray reflected from third mirror 131 is reflected in windshield 220.

A distance of reference ray Lc from first mirror 121 to second mirror 122 is shorter than a distance of reference ray Lc from third mirror 131 to fourth mirror 132. Therefore, a size of head-up display 100 can be reduced. A distance of reference ray Lc from screen 111 to first mirror 121 is shorter than a distance of reference ray Lc from first mirror 121 to intermediate image M. Therefore, downsizing of first mirror 121 can be achieved, and the size of head-up display 100 can also be reduced. An upper end of the reflection surface of first mirror 121 is located above a lower end of the reflection surface of fourth mirror 132. Therefore, the size of head-up display 100 can be reduced.

An exit pupil position of relay optical system 120 is brought close to projection optical system 130, which allows a difference in angle output from screen 111 to be reduced from a central portion to a peripheral portion of a display image region of screen 111. Therefore, a fluctuation in distortion can be suppressed when screen 111 is swung in the direction of reference ray Lc.

In relay optical system 120 of the first exemplary embodiment, the reflection surface of first mirror 121 has a concave shape. The reflection surface of second mirror 122 has a convex shape. The convex shape of second mirror 122 can satisfactorily correct an asymmetrically eccentric distortion generated in first mirror 121. The concave shape of first mirror 121 can also exert condensing effect of forming an intermediate image from the image of screen 111. Alternatively, one of first mirror 121 and second mirror 122 may be a free curved surface, and the other may be a planar mirror. Relay optical system 120 is not limited to two mirrors, i.e., first mirror 121 and second mirror 122, but relay optical system 120 may be configured by a refraction optical element, such as a lens element which has a similar effect, or configured only by first mirror 121.

In projection optical system 130 of the first exemplary embodiment, the reflection surface of third mirror 131 has a convex shape. The reflection surface of fourth mirror 132 has a concave shape. The convex shape of third mirror 131 can satisfactorily correct the asymmetrically eccentric distortion generated in fourth mirror 132. The concave shape of fourth mirror 132 allows observer D to visually recognize virtual image I magnified larger than intermediate image M.

At this point, first mirror 121 has the largest power in relay optical system 120 and projection optical system 130. Therefore, the downsizing of relay optical system 120 can be achieved.

In the first exemplary embodiment, first mirror 121, second mirror 122, third mirror 131, and fourth mirror 132 have a free curved surface shape. This is because the distortion of virtual image due to the reflection is corrected such that good virtual image I is observed over a whole region of viewpoint region 300.

[1-2. Effects and others]

As described above, in the first exemplary embodiment, head-up display 100 includes display device 110, relay optical system 120, and projection optical system 130. The image formed by relay optical system 120 is larger than the display image display on screen 111 by display device 110. Therefore, the downsizing of display device 110 can be achieved. Because head-up display 100 includes relay optical system 120, the size of screen 111 is reduced while the screen distortion is corrected satisfactorily, and the positive power of projection optical system 130 can be suppressed.

(Second exemplary embodiment)

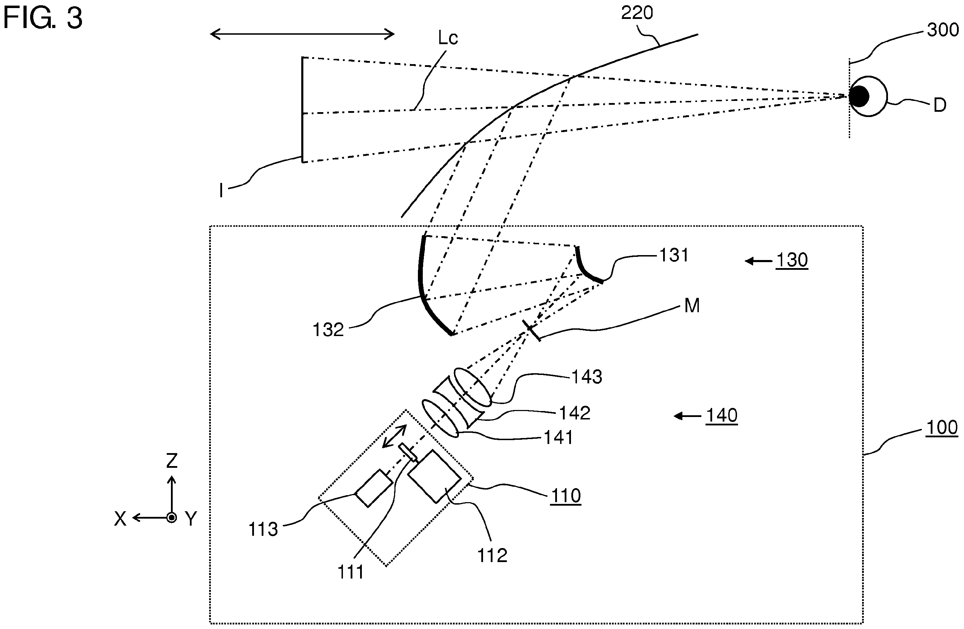

A second exemplary embodiment will be described below with reference to FIG. 3. In the second exemplary embodiment, a configuration of relay optical system 140 differs from that of relay optical system 120 of the first exemplary embodiment, and other configurations are similar to those of the first exemplary embodiment. Therefore, points different from the first exemplary embodiment will be mainly described below, and the description about the similar configuration will be omitted.

[2-1. Configuration]

[2-1-1. Overall configuration of head-up display]

FIG. 3 is a schematic diagram of an optical cross section illustrating head-up display 100 of the second exemplary embodiment.

Relay optical system 140 of the second exemplary embodiment includes first lens 141, second lens 142, and third lens 143. Relay optical system 140 has the positive power as a whole. First lens 141 is formed into a spherical shape having the positive power. Second lens 142 is formed into a spherical shape having the negative power. Third lens 143 is formed into a spherical shape having the positive power. Alternatively, one of first lens 141, second lens 142, and third lens 143 may have the free curved surface shape. Relay optical system 140 is not limited to three lenses, i.e., first lens 141, second lens 142, and third lens 143, but relay optical system 140 may be configured by four or more lenses.

The image displayed on screen 111 of display device 110 is refracted through first lens 141, refracted through second lens 142, and refracted through third lens 143, thereby forming intermediate image M. At this point, intermediate image M is formed while being magnified larger than the image displayed on screen 111. Specifically, the power of relay optical system 140 is set so as to satisfy the following Condition (1).

$$1.4 < \beta < 4.0 \cdots (1)$$

where $\beta$ is lateral magnification of relay optical system 140.

Projection optical system 130 includes third mirror 131 and fourth mirror 132. Projection optical system 130 reflects intermediate image M formed by relay optical system through third mirror 131, and reflects intermediate image M through fourth mirror 132, thereby projecting intermediate image M on windshield 220.

[2-1-2. Disposition configuration of projection optical system, relay optical system, and display device]

In head-up display 100 of the second exemplary embodiment, display device 110 is disposed below relay optical system 140 and projection optical system 130. The display surface of screen 111 of display device 110 is oriented toward first lens 141. At this point, it is desirable that reference ray Lc output from display device 110 is inclined with respect to the display surface of screen 111. This enables prevention of the stray light, which is caused by the reflection of the external light such as sunlight entering the casing of head-up display 100 on the display surface of screen 111. Screen 111 of display device 110 is made of an optical member having a diffusion property. Scanning laser 113 that projects the image on screen 111 is disposed at the back of screen 111.

Third mirror 131 is disposed above relay optical system 140. The reflection surface of third mirror 131 is eccentric such that the ray output from third lens 143 is reflected in fourth mirror 132. Fourth mirror 132 is disposed on the virtual image I side (a positive direction of an X-axis) with respect to third mirror 131. The reflection surface of fourth mirror 132 is eccentric such that the ray reflected from third mirror 131 is projected on windshield 220.

[2-2. Effects and others]

As described above, in the second exemplary embodiment, head-up display 100 includes display device 110, relay optical system 140, and projection optical system 130. The image formed by relay optical system 140 is larger than the display image displayed on screen 111 by display device 110. Therefore, the downsizing of display device 110 can be achieved. Because head-up display 100 includes relay optical system 140, the size of screen 111 is reduced while the screen distortion is corrected satisfactorily, and the positive power of projection optical system 130 can be suppressed.

(Third exemplary embodiment)

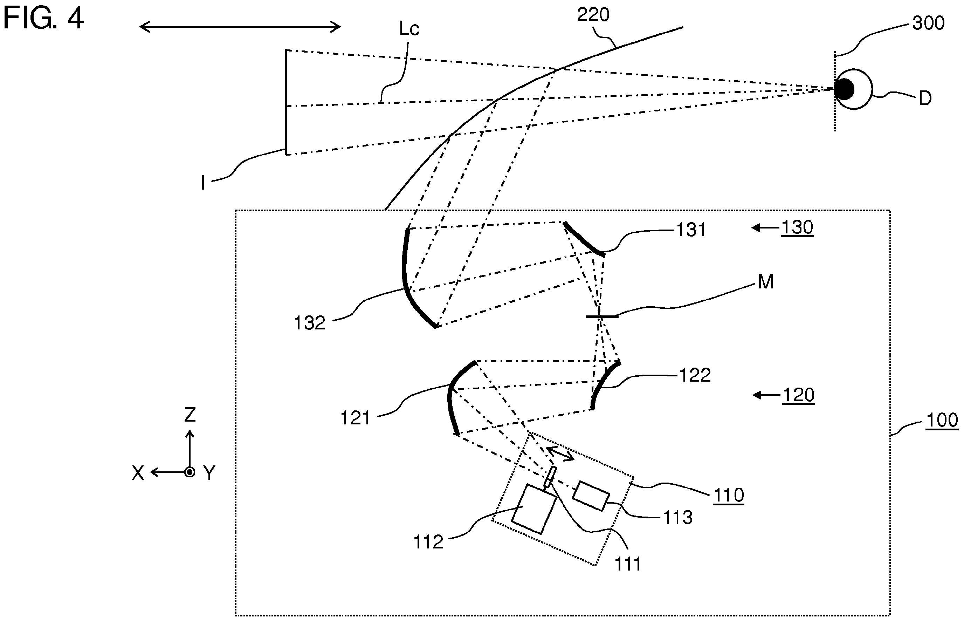

A third exemplary embodiment will be described below with reference to FIG. 4. In the third exemplary embodiment, a disposition position of relay optical system 120 differs from that of the first exemplary embodiment, and other configurations are similar to those of the first exemplary embodiment. Therefore, points different from the first exemplary embodiment will be mainly described below, and the description about the similar configuration will be omitted.

[3-1. Configuration]

[3-1-1. Disposition configuration of projection optical system, relay optical system, and display device]

In head-up display 100 of the third exemplary embodiment, display device 110 is disposed below relay optical system 120 and projection optical system 130. A display surface of screen 111 of display device 110 is oriented toward first mirror 121. At this point, it is desirable that reference ray Lc output from display device 110 is inclined with respect to the display surface of screen 111. This enables prevention of the stray light, which is caused by the reflection of the external light such as the sunlight entering the casing of head-up display 100 on the display surface of screen 111. Screen 111 is made of an optical member having a diffusion property. Scanning laser 113 that projects the image on screen 111 is disposed at the back of screen 111.

First mirror 121 is disposed above display device 110 in a vertical direction (the positive direction of a Z-axis) of vehicle 200 and on the virtual image I side (the positive direction of the X-axis). The reflection surface of first mirror 121 is disposed to be eccentric such that the image displayed by display device 110 is reflected in second mirror 122. Second mirror 122 is disposed above first mirror 121 and on the observer D side (a negative direction of the X-axis). The reflection surface of second mirror 122 is disposed to be eccentric such that the ray reflected from first mirror 121 is reflected in third mirror 131.

The distance of reference ray Lc between first mirror 121 and second mirror 122 is shorter than the distance of reference ray Lc between third mirror 131 and fourth mirror 132. Therefore, a size of head-up display 100 can be reduced. The distance of reference ray Lc from screen 111 to first mirror 121 is shorter than the distance of reference ray Lc from first mirror 121 to intermediate image M. Therefore, downsizing of first mirror 121 can be achieved, and the size of head-up display 100 can also be reduced. The output side of screen 111 is oriented toward a traveling direction of vehicle 200. Therefore, scanning laser 113 can be disposed on the observer D side, and interference with a structure ahead of the vehicle can be avoided.

(Other exemplary embodiments)

As described above, the first to third exemplary embodiments have been described as illustration of the technique disclosed in this application. However, the technique of the present disclosure is not limited to the first to third exemplary embodiments, and is applicable to exemplary embodiments where modifications, replacements, additions, omissions, and the like are appropriately made. In addition, the components described in the first to third exemplary embodiments can be combined to obtain a new exemplary embodiment.

In the first to third exemplary embodiments, the projector or the scanning laser, which projects the image on screen 111, is used as display device 110. Alternatively, the projector or the scanning laser is not used, but a liquid crystal display, an organic light emitting diode (electroluminescence), and a plasma display may be used as screen 111. Driving unit 112 is the driving device that moves screen 111 along reference ray Lc.

In the first to third exemplary embodiments, one of third mirror 131 and fourth mirror 132 may be a free curved surface and the other may be a planar mirror. Projection optical system 130 is not limited to two mirrors, i.e., third mirror 131 and fourth mirror 132, but projection optical system 130 may be configured by a refraction optical element, such as a lens element which has a similar effect, or configured only by fourth mirror 132.

In the first to third exemplary embodiments, the mirror having the rotationally asymmetrical shape is used as third mirror 131. Alternatively, third mirror 131 may have a so-called saddle type surface shape in which an X-direction differs from a Y-direction in a curvature.

In the first and third exemplary embodiments, the mirror having the rotationally asymmetrical shape is used as second mirror 122. Alternatively, second mirror 122 may have a so-called saddle type surface shape in which an X-direction differs from a Y-direction in a curvature.

The above exemplary embodiments are illustrations of the technique of the present disclosure. Therefore, various changes, replacements, additions, or omissions may be made to the exemplary embodiments within the scope of claims or their equivalents.

(Numerical examples)

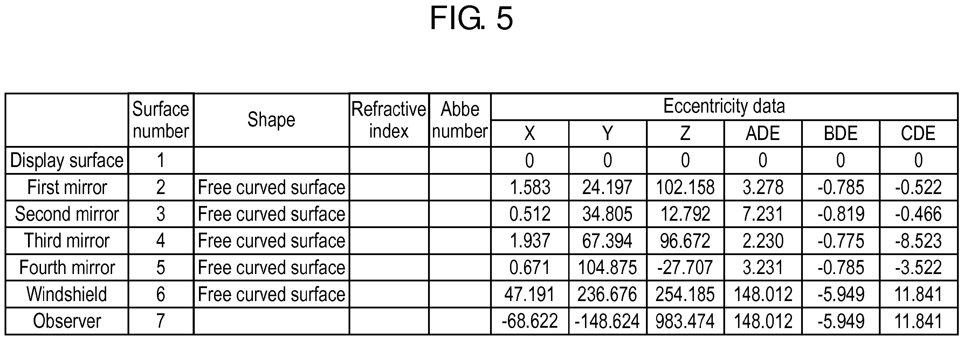

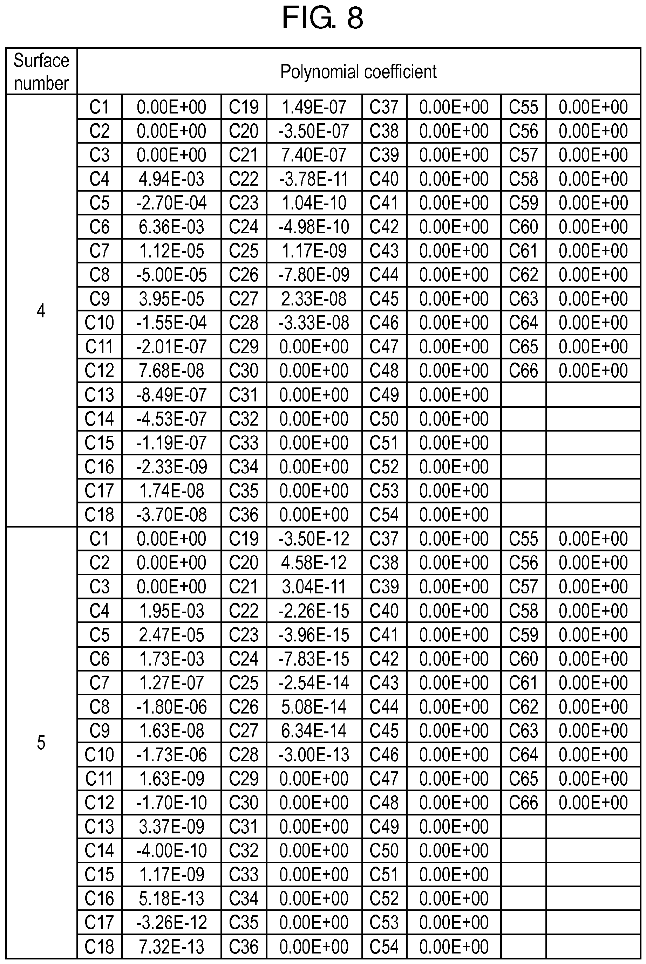

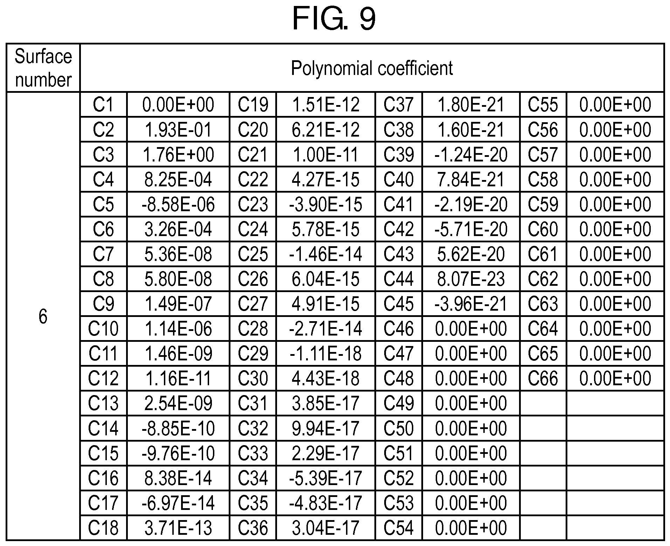

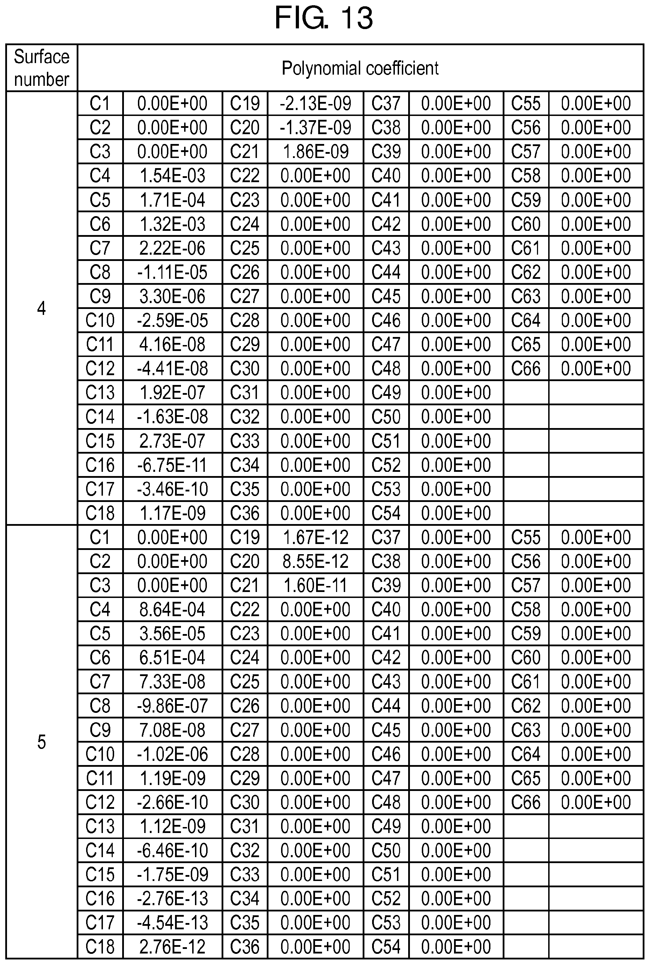

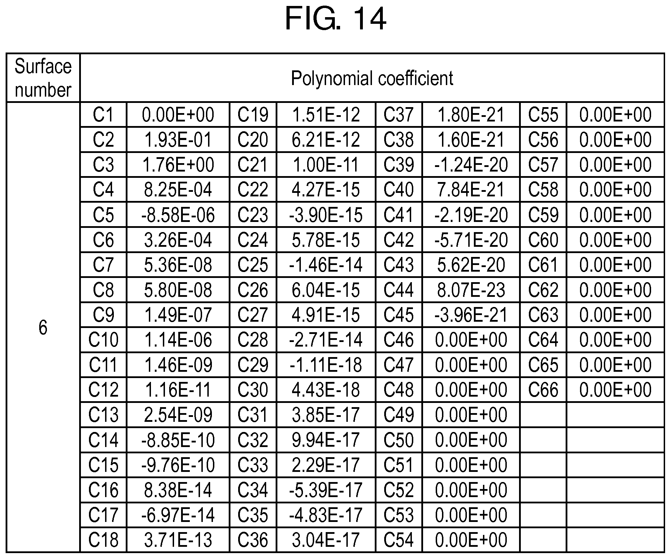

Numerical examples corresponding to the first and second exemplary embodiments will be described with reference to FIGS. 5 to 15.

Specific example of the display device according to the present technique will be described below. In the following examples, a unit of length is (mm) and a unit of angle is (degrees) in tables. A free curved surface is defined by the following Mathematical Formula 1.

"Mathematical Formula 1"

$$z = \frac{cr^2}{1 + \sqrt{1 - (1+k)c^2 r^2}} + \sum_{m,n} C_j x^m y^n \qquad (m \geq 0, n \geq 0, m + n > 0)$$

$$j = \frac{(m+n)^2 + m + 3n}{2} + 1$$

where z is a sag at position (x, y) from axes defining a surface, r is a radius of curvature at an origin on the axes defining a surface, c is a curvature at the origin on the axes defining a surface, k is a Korenich constant which corresponds to $C_1$ of the polynomial coefficient, and Cj is a coefficient of a monimial $x^m y^n$, and m and n are each an integer equal to or greater than 0.

In each of numerical examples, a coordinate origin that is a reference is the center of the image (display surface) displayed by display device 110. In the table, the X-axis indicates a horizontal direction of the display surface, the Y-axis indicates a vertical direction of the display surface, and the Z-axis indicates a direction perpendicular to the display surface.

In the eccentricity data, ADE refers to an amount of rotation of the mirror or the lens about the X-axis from the Z-axis direction to the Y-axis direction. BDE refers to an amount of rotation of the mirror or the lens about the Y-axis from the X-axis direction to the Z-axis direction. CDE refers to an amount of rotation of the mirror or the lens about the Z-axis from the X-axis direction to the Y-axis direction.

[Numerical example 1]

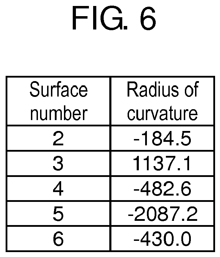

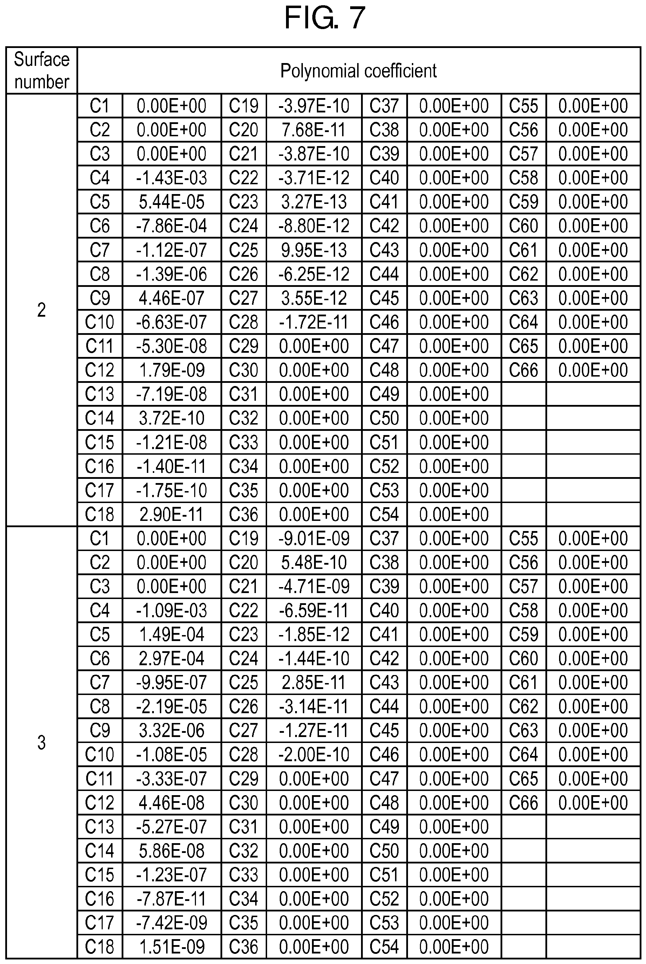

FIGS. 5 to 9 illustrate data of the optical system of head-up display 100 according to Numerical Example 1 (first exemplary embodiment). Numerical Example 1 adopts the configuration of the first exemplary embodiment. FIGS. 5 to 9 illustrate the data of the specific optical system. FIG. 5 illustrates eccentricity data of each surface in the optical element of head-up display 100. FIG. 6 illustrates a radius of curvature of each surface. FIGS. 7 to 9 illustrate a polynomial coefficient indicating the shape of the free curved surface.

[Numerical example 2]

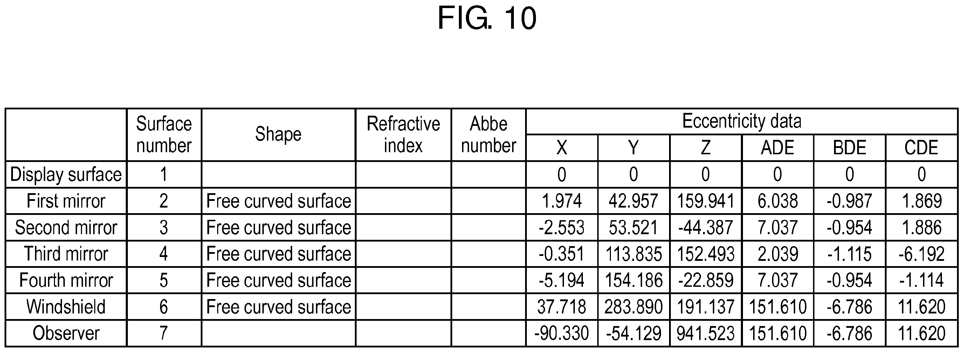

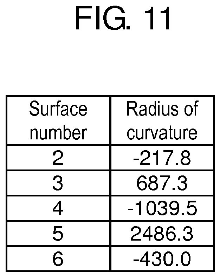

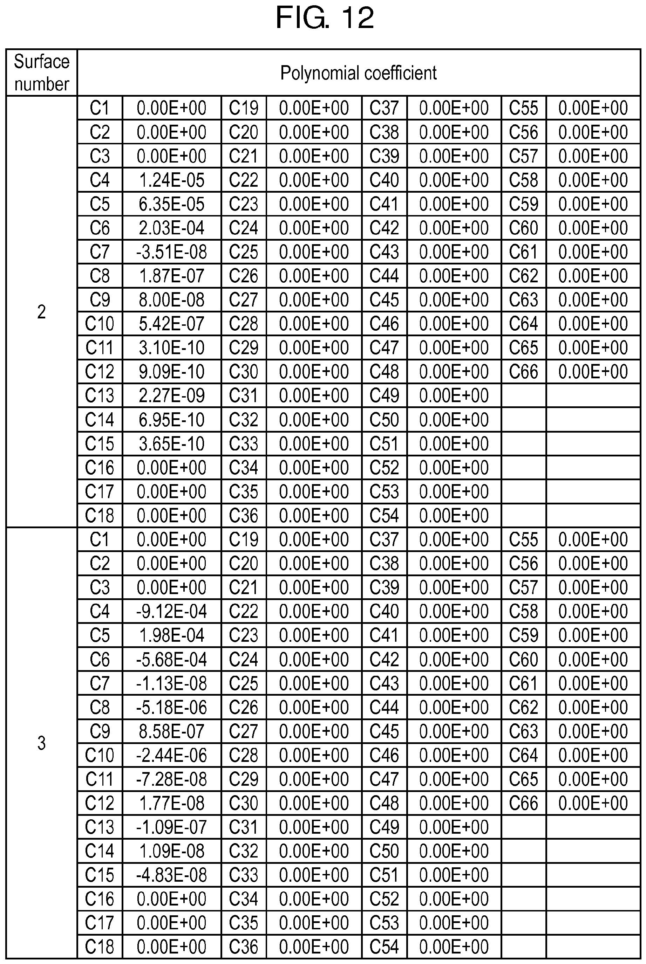

FIGS. 10 to 14 illustrate data of the optical system of head-up display 100 according to Numerical Example 2 (first exemplary embodiment). Numerical Example 2 adopts the configuration of the first exemplary embodiment. FIGS. 10 to 14 illustrate the data of the specific optical system. FIG. 10 illustrates the eccentricity data of each surface in the optical element of head-up display 100. FIG. 11 illustrates the radius of curvature. FIGS. 12 to 14 illustrate the polynomial coefficient indicating the shape of the free curved surface.

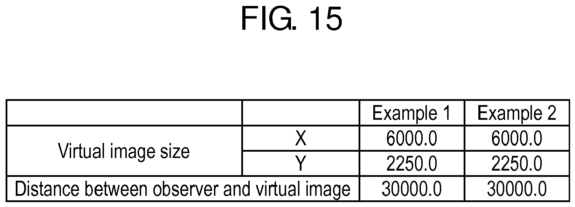

FIG. 15 illustrates a size of virtual image I of Examples 1 and 2 and a distance from observer D to virtual image I.

Table 1 illustrates corresponding values of Conditional Expression (1) of the first and second exemplary embodiments.

"Table 1"

|  | EXAMPLE 1 | EXAMPLE 2 |
|---|---|---|
| CONDITIONAL EXPRESSION (1) | 1.73 | 2.29 |

INDUSTRIAL APPLICABILITY

The present disclosure is applicable to a head-up display that projects the image on a reflection transparent member. Specifically, the present disclosure is applicable to the head-up display mounted on the moving body including the windshield.

REFERENCE MARKS IN THE DRAWINGS

| | |
|---|---|
| 100 | head-up display |
| 110 | display device |
| 111 | screen |
| 112 | driving unit |
| 113 | scanning laser |
| 120 | relay optical system |
| 121 | first mirror |
| 122 | second mirror |
| 130 | projection optical system |
| 131 | third mirror |
| 132 | fourth mirror |
| 140 | relay optical system |
| 141 | first lens |
| 142 | second lens |
| 143 | third lens |
| 200 | vehicle |
| 210 | dashboard |
| 220 | windshield |
| 300 | viewpoint region |

**Claims**

1.  A head-up display (100) that projects an image on a reflective member (220) having transparency to cause an observer (D) to visually recognize a virtual image (I), the head-up display (100) comprising:

    a display screen (111) that displays the image;
    a scanning laser (113) configured to scan a surface of the display screen (111) to form the image;
    an optical system (120, 130) that projects the image displayed by the display screen (111) on the reflective member (220), the optical system (120, 130) comprising:

    a relay optical system (120) that forms an intermediate image (M) in the air from the image of the display screen (111), and
    a projection optical system (130) that projects the intermediate image (M) on the reflective member (220); and
    a driving device (112) configured to rotate and move the display screen (111) in an optical axis direction (Lc) of the optical system (120, 130) such that a drawing cycle of the scanning laser (113) and a swing cycle of the display screen (111) are synchronized,
    wherein the intermediate image (M) is larger than the display image displayed on of the screen (111).

2.  The head-up display (100) according to claim 1, wherein a moving amount of the display screen (111) is smaller than a moving amount of the intermediate image (M) associated with the movement of the display (111).

3.  The head-up display (100) according to claim 2, wherein
    the display screen (111) displays the image by scanning of light emitted from a light source (113), and
    the driving device (112) moves according to a scanning position of the display screen (111).

4.  The head-up display (100) according to claim 1, wherein
    the display screen (111) displays the image by scanning of light emitted from a light source (113), and
    the driving device (112) moves according to a scanning position of the display screen (111).

5.  The head-up display (100) according to claim 1, satisfying the following Conditional Expression (1):

$$1.4 < \beta < 4.0 \ldots (1)$$

where $\beta$ is lateral magnification of the relay optical system (120).

**6.** A moving body (200) comprising a head-up display (100) according to claim 1.

**7.** The head-up display (100) according to claim 1, wherein the driving device (112) is configured to incline the display screen (111).

**8.** The moving body (200) according to claim 6, wherein the driving device (112) is configured to incline the display screen (111).


**Patentansprüche**

**1.** Headup-Anzeige (100), die ein Bild auf ein reflektierendes Element (220) mit Transparenz projiziert, um zu veranlassen, dass ein Beobachter (D) ein virtuelles Bild (I) visuell wahrnimmt, wobei das Headup-Display (100) umfasst:

einen Anzeigebildschirm (111), der das Bild anzeigt,
einen Abtastlaser (113), der ausgestaltet ist, eine Oberfläche des Anzeigebildschirms (111) abzutasten, um das Bild zu bilden,
ein optisches System (120, 130), das das durch den Anzeigebildschirm (111) angezeigte Bild auf das reflektierende Element (220) projiziert, wobei das optische System (120, 130) umfasst:

ein optisches Weiterleitungssystem (120), das aus dem Bild des Anzeigebildschirms (111) in der Luft ein Zwischenbild (M) bildet, und
ein optisches Projektionssystem (130), das das Zwischenbild (M) auf das reflektierende Element (220) projiziert, und

eine Antriebsvorrichtung (112), die ausgestaltet ist, den Anzeigebildschirm (111) in einer optischen Achsenrichtung (Lc) des optischen Systems (120, 130) zu rotieren und zu bewegen, so dass ein Zugzyklus des Abtastlasers (113) und ein Schwingungszyklus des Anzeigebildschirms (111) synchronisiert sind,
wobei das Zwischenbild (M) größer ist als das Anzeigebild, das auf dem Bildschirm (111) angezeigt wird.

**2.** Headup-Anzeige (100) nach Anspruch 1, wobei ein Bewegungsmaß des Anzeigebildschirms (111) kleiner ist als ein Bewegungsmaß des Zwischenbildes (M), das mit der Bewegung der Anzeige (111) assoziiert ist.

**3.** Headup-Anzeige (100) nach Anspruch 2, wobei
der Anzeigebildschirm (111) das Bild durch Abtasten von Licht anzeigt, das von einer Lichtquelle (113) emittiert wird, und
sich die Antriebsvorrichtung (112) gemäß einer Abtastposition des Anzeigebildschirms (111) bewegt.

**4.** Headup-Anzeige (100) nach Anspruch 1, wobei
der Anzeigebildschirm (111) das Bild durch Abtasten von Licht anzeigt, das von einer Lichtquelle (113) emittiert wird, und
sich die Antriebsvorrichtung (112) gemäß einer Abtastposition des Anzeigebildschirms (111) bewegt.

**5.** Headup-Anzeige (100) nach Anspruch 1, die den folgenden Bedingungsausdruck (1) erfüllt;

$$1.4 < \beta < 4.0 \ldots (1),$$

wobei $\beta$ eine laterale Vergrößerung des optischen Weiterleitungssystems (120) ist.

**6.** Sich bewegender Körper (200) mit einer Headup-Anzeige (100) nach Anspruch 1.

**7.** Headup-Anzeige (100) nach Anspruch 1, wobei die Antriebsvorrichtung (112) ausgestaltet ist, den Anzeigebildschirm (111) zu neigen.

**8.** Sich bewegender Körper (200) nach Anspruch 6, wobei die Antriebsvorrichtung (112) ausgestaltet ist, den Anzeigebildschirm (111) zu neigen.

**Revendications**

**1.** Afficheur tête haute (100) qui projette une image sur un élément réfléchissant (220) ayant une transparence pour amener un observateur (D) à reconnaître visuellement une image virtuelle (I), l'afficheur tête haute (100) comprenant :

un écran d'affichage (111) qui affiche l'image,
un laser de balayage (113) configuré pour balayer une surface de l'écran d'affichage (111) pour former l'image,
un système optique (120, 130) qui projette l'image affichée par l'écran d'affichage (111) sur l'élément réfléchissant (220), le système optique (120, 130) comprenant :

un système optique de retransmission (120) qui forme une image intermédiaire (M) dans l'air à partir de l'image de l'écran d'affichage (111), et
un système optique de projection (130) qui projette l'image intermédiaire (M) sur l'élément réfléchissant (220), et

un dispositif d'entraînement (112) configuré pour faire tourner et déplacer l'écran d'affichage (111) dans une direction d'axe optique (Lc) du système optique (120, 130) de telle sorte qu'un cycle de traction du laser de balayage (113) et un cycle d'oscillation de l'écran d'affichage (111) sont synchronisés,
dans lequel l'image intermédiaire (M) est plus grande que l'image d'affichage affichée sur l'écran (111).

**2.** Afficheur tête haute (100) selon la revendication 1, dans lequel une mesure en mouvement de l'écran d'affichage (111) est inférieure à une mesure en mouvement de l'image intermédiaire (M) associée au mouvement de l'affichage (111).

**3.** Afficheur tête haute (100) selon la revendication 2, dans lequel
l'écran d'affichage (111) affiche l'image en balayant de la lumière émise par une source de lumière (113), et
le dispositif d'entraînement (112) se déplace suivant une position de balayage de l'écran d'affichage (111).

**4.** Afficheur tête haute (100) selon la revendication 1, dans lequel
l'écran d'affichage (111) affiche l'image en balayant de la lumière émise par une source de lumière (113), et
le dispositif d'entraînement (112) se déplace suivant une position de balayage de l'écran d'affichage (111).

**5.** Afficheur tête haute (100) selon la revendication 1, satisfaisant à l'expression conditionnelle suivante (1) :

$$1{,}4 < \beta < 4{,}0 \ \dots \ (1)$$

dans laquelle $\beta$ est un grossissement latéral du système optique de retransmission (120).

**6.** Corps mobile (200) comprenant un afficheur tête haute (100) selon la revendication 1.

**7.** Afficheur tête haute (100) selon la revendication 1, dans lequel le dispositif d'entraînement (112) est configuré pour incliner l'écran d'affichage (111).

**8.** Corps mobile (200) selon la revendication 6, dans lequel le dispositif d'entraînement (112) est configuré pour incliner l'écran d'affichage (111).

FIG. 1

EP 3 293 562 B1

FIG. 2

EP 3 293 562 B1

FIG. 3

FIG. 4

EP 3 293 562 B1

## FIG. 5

| | Surface number | Shape | Refractive index | Abbe number | Eccentricity data | | | | | |
|---|---|---|---|---|---|---|---|---|---|---|
| | | | | | X | Y | Z | ADE | BDE | CDE |
| Display surface | 1 | | | | 0 | 0 | 0 | 0 | 0 | 0 |
| First mirror | 2 | Free curved surface | | | 1.583 | 24.197 | 102.158 | 3.278 | -0.785 | -0.522 |
| Second mirror | 3 | Free curved surface | | | 0.512 | 34.805 | 12.792 | 7.231 | -0.819 | -0.466 |
| Third mirror | 4 | Free curved surface | | | 1.937 | 67.394 | 96.672 | 2.230 | -0.775 | -8.523 |
| Fourth mirror | 5 | Free curved surface | | | 0.671 | 104.875 | -27.707 | 3.231 | -0.785 | -3.522 |
| Windshield | 6 | Free curved surface | | | 47.191 | 236.676 | 254.185 | 148.012 | -5.949 | 11.841 |
| Observer | 7 | | | | -68.622 | -148.624 | 983.474 | 148.012 | -5.949 | 11.841 |

EP 3 293 562 B1

# FIG. 6

| Surface number | Radius of curvature |
|----------------|---------------------|
| 2 | -184.5 |
| 3 | 1137.1 |
| 4 | -482.6 |
| 5 | -2087.2 |
| 6 | -430.0 |

# FIG. 7

| Surface number | Polynomial coefficient | | | | | | | |
|---|---|---|---|---|---|---|---|---|
| 2 | C1 | 0.00E+00 | C19 | -3.97E-10 | C37 | 0.00E+00 | C55 | 0.00E+00 |
| | C2 | 0.00E+00 | C20 | 7.68E-11 | C38 | 0.00E+00 | C56 | 0.00E+00 |
| | C3 | 0.00E+00 | C21 | -3.87E-10 | C39 | 0.00E+00 | C57 | 0.00E+00 |
| | C4 | -1.43E-03 | C22 | -3.71E-12 | C40 | 0.00E+00 | C58 | 0.00E+00 |
| | C5 | 5.44E-05 | C23 | 3.27E-13 | C41 | 0.00E+00 | C59 | 0.00E+00 |
| | C6 | -7.86E-04 | C24 | -8.80E-12 | C42 | 0.00E+00 | C60 | 0.00E+00 |
| | C7 | -1.12E-07 | C25 | 9.95E-13 | C43 | 0.00E+00 | C61 | 0.00E+00 |
| | C8 | -1.39E-06 | C26 | -6.25E-12 | C44 | 0.00E+00 | C62 | 0.00E+00 |
| | C9 | 4.46E-07 | C27 | 3.55E-12 | C45 | 0.00E+00 | C63 | 0.00E+00 |
| | C10 | -6.63E-07 | C28 | -1.72E-11 | C46 | 0.00E+00 | C64 | 0.00E+00 |
| | C11 | -5.30E-08 | C29 | 0.00E+00 | C47 | 0.00E+00 | C65 | 0.00E+00 |
| | C12 | 1.79E-09 | C30 | 0.00E+00 | C48 | 0.00E+00 | C66 | 0.00E+00 |
| | C13 | -7.19E-08 | C31 | 0.00E+00 | C49 | 0.00E+00 | | |
| | C14 | 3.72E-10 | C32 | 0.00E+00 | C50 | 0.00E+00 | | |
| | C15 | -1.21E-08 | C33 | 0.00E+00 | C51 | 0.00E+00 | | |
| | C16 | -1.40E-11 | C34 | 0.00E+00 | C52 | 0.00E+00 | | |
| | C17 | -1.75E-10 | C35 | 0.00E+00 | C53 | 0.00E+00 | | |
| | C18 | 2.90E-11 | C36 | 0.00E+00 | C54 | 0.00E+00 | | |
| 3 | C1 | 0.00E+00 | C19 | -9.01E-09 | C37 | 0.00E+00 | C55 | 0.00E+00 |
| | C2 | 0.00E+00 | C20 | 5.48E-10 | C38 | 0.00E+00 | C56 | 0.00E+00 |
| | C3 | 0.00E+00 | C21 | -4.71E-09 | C39 | 0.00E+00 | C57 | 0.00E+00 |
| | C4 | -1.09E-03 | C22 | -6.59E-11 | C40 | 0.00E+00 | C58 | 0.00E+00 |
| | C5 | 1.49E-04 | C23 | -1.85E-12 | C41 | 0.00E+00 | C59 | 0.00E+00 |
| | C6 | 2.97E-04 | C24 | -1.44E-10 | C42 | 0.00E+00 | C60 | 0.00E+00 |
| | C7 | -9.95E-07 | C25 | 2.85E-11 | C43 | 0.00E+00 | C61 | 0.00E+00 |
| | C8 | -2.19E-05 | C26 | -3.14E-11 | C44 | 0.00E+00 | C62 | 0.00E+00 |
| | C9 | 3.32E-06 | C27 | -1.27E-11 | C45 | 0.00E+00 | C63 | 0.00E+00 |
| | C10 | -1.08E-05 | C28 | -2.00E-10 | C46 | 0.00E+00 | C64 | 0.00E+00 |
| | C11 | -3.33E-07 | C29 | 0.00E+00 | C47 | 0.00E+00 | C65 | 0.00E+00 |
| | C12 | 4.46E-08 | C30 | 0.00E+00 | C48 | 0.00E+00 | C66 | 0.00E+00 |
| | C13 | -5.27E-07 | C31 | 0.00E+00 | C49 | 0.00E+00 | | |
| | C14 | 5.86E-08 | C32 | 0.00E+00 | C50 | 0.00E+00 | | |
| | C15 | -1.23E-07 | C33 | 0.00E+00 | C51 | 0.00E+00 | | |
| | C16 | -7.87E-11 | C34 | 0.00E+00 | C52 | 0.00E+00 | | |
| | C17 | -7.42E-09 | C35 | 0.00E+00 | C53 | 0.00E+00 | | |
| | C18 | 1.51E-09 | C36 | 0.00E+00 | C54 | 0.00E+00 | | |

# FIG. 8

| Surface number | Polynomial coefficient | | | | | | | |
|---|---|---|---|---|---|---|---|---|
| 4 | C1 | 0.00E+00 | C19 | 1.49E-07 | C37 | 0.00E+00 | C55 | 0.00E+00 |
| | C2 | 0.00E+00 | C20 | -3.50E-07 | C38 | 0.00E+00 | C56 | 0.00E+00 |
| | C3 | 0.00E+00 | C21 | 7.40E-07 | C39 | 0.00E+00 | C57 | 0.00E+00 |
| | C4 | 4.94E-03 | C22 | -3.78E-11 | C40 | 0.00E+00 | C58 | 0.00E+00 |
| | C5 | -2.70E-04 | C23 | 1.04E-10 | C41 | 0.00E+00 | C59 | 0.00E+00 |
| | C6 | 6.36E-03 | C24 | -4.98E-10 | C42 | 0.00E+00 | C60 | 0.00E+00 |
| | C7 | 1.12E-05 | C25 | 1.17E-09 | C43 | 0.00E+00 | C61 | 0.00E+00 |
| | C8 | -5.00E-05 | C26 | -7.80E-09 | C44 | 0.00E+00 | C62 | 0.00E+00 |
| | C9 | 3.95E-05 | C27 | 2.33E-08 | C45 | 0.00E+00 | C63 | 0.00E+00 |
| | C10 | -1.55E-04 | C28 | -3.33E-08 | C46 | 0.00E+00 | C64 | 0.00E+00 |
| | C11 | -2.01E-07 | C29 | 0.00E+00 | C47 | 0.00E+00 | C65 | 0.00E+00 |
| | C12 | 7.68E-08 | C30 | 0.00E+00 | C48 | 0.00E+00 | C66 | 0.00E+00 |
| | C13 | -8.49E-07 | C31 | 0.00E+00 | C49 | 0.00E+00 | | |
| | C14 | -4.53E-07 | C32 | 0.00E+00 | C50 | 0.00E+00 | | |
| | C15 | -1.19E-07 | C33 | 0.00E+00 | C51 | 0.00E+00 | | |
| | C16 | -2.33E-09 | C34 | 0.00E+00 | C52 | 0.00E+00 | | |
| | C17 | 1.74E-08 | C35 | 0.00E+00 | C53 | 0.00E+00 | | |
| | C18 | -3.70E-08 | C36 | 0.00E+00 | C54 | 0.00E+00 | | |
| 5 | C1 | 0.00E+00 | C19 | -3.50E-12 | C37 | 0.00E+00 | C55 | 0.00E+00 |
| | C2 | 0.00E+00 | C20 | 4.58E-12 | C38 | 0.00E+00 | C56 | 0.00E+00 |
| | C3 | 0.00E+00 | C21 | 3.04E-11 | C39 | 0.00E+00 | C57 | 0.00E+00 |
| | C4 | 1.95E-03 | C22 | -2.26E-15 | C40 | 0.00E+00 | C58 | 0.00E+00 |
| | C5 | 2.47E-05 | C23 | -3.96E-15 | C41 | 0.00E+00 | C59 | 0.00E+00 |
| | C6 | 1.73E-03 | C24 | -7.83E-15 | C42 | 0.00E+00 | C60 | 0.00E+00 |
| | C7 | 1.27E-07 | C25 | -2.54E-14 | C43 | 0.00E+00 | C61 | 0.00E+00 |
| | C8 | -1.80E-06 | C26 | 5.08E-14 | C44 | 0.00E+00 | C62 | 0.00E+00 |
| | C9 | 1.63E-08 | C27 | 6.34E-14 | C45 | 0.00E+00 | C63 | 0.00E+00 |
| | C10 | -1.73E-06 | C28 | -3.00E-13 | C46 | 0.00E+00 | C64 | 0.00E+00 |
| | C11 | 1.63E-09 | C29 | 0.00E+00 | C47 | 0.00E+00 | C65 | 0.00E+00 |
| | C12 | -1.70E-10 | C30 | 0.00E+00 | C48 | 0.00E+00 | C66 | 0.00E+00 |
| | C13 | 3.37E-09 | C31 | 0.00E+00 | C49 | 0.00E+00 | | |
| | C14 | -4.00E-10 | C32 | 0.00E+00 | C50 | 0.00E+00 | | |
| | C15 | 1.17E-09 | C33 | 0.00E+00 | C51 | 0.00E+00 | | |
| | C16 | 5.18E-13 | C34 | 0.00E+00 | C52 | 0.00E+00 | | |
| | C17 | -3.26E-12 | C35 | 0.00E+00 | C53 | 0.00E+00 | | |
| | C18 | 7.32E-13 | C36 | 0.00E+00 | C54 | 0.00E+00 | | |

# FIG. 9

| Surface number | Polynomial coefficient | | | | | | | |
|---|---|---|---|---|---|---|---|---|
| 6 | C1 | 0.00E+00 | C19 | 1.51E-12 | C37 | 1.80E-21 | C55 | 0.00E+00 |
| | C2 | 1.93E-01 | C20 | 6.21E-12 | C38 | 1.60E-21 | C56 | 0.00E+00 |
| | C3 | 1.76E+00 | C21 | 1.00E-11 | C39 | -1.24E-20 | C57 | 0.00E+00 |
| | C4 | 8.25E-04 | C22 | 4.27E-15 | C40 | 7.84E-21 | C58 | 0.00E+00 |
| | C5 | -8.58E-06 | C23 | -3.90E-15 | C41 | -2.19E-20 | C59 | 0.00E+00 |
| | C6 | 3.26E-04 | C24 | 5.78E-15 | C42 | -5.71E-20 | C60 | 0.00E+00 |
| | C7 | 5.36E-08 | C25 | -1.46E-14 | C43 | 5.62E-20 | C61 | 0.00E+00 |
| | C8 | 5.80E-08 | C26 | 6.04E-15 | C44 | 8.07E-23 | C62 | 0.00E+00 |
| | C9 | 1.49E-07 | C27 | 4.91E-15 | C45 | -3.96E-21 | C63 | 0.00E+00 |
| | C10 | 1.14E-06 | C28 | -2.71E-14 | C46 | 0.00E+00 | C64 | 0.00E+00 |
| | C11 | 1.46E-09 | C29 | -1.11E-18 | C47 | 0.00E+00 | C65 | 0.00E+00 |
| | C12 | 1.16E-11 | C30 | 4.43E-18 | C48 | 0.00E+00 | C66 | 0.00E+00 |
| | C13 | 2.54E-09 | C31 | 3.85E-17 | C49 | 0.00E+00 | | |
| | C14 | -8.85E-10 | C32 | 9.94E-17 | C50 | 0.00E+00 | | |
| | C15 | -9.76E-10 | C33 | 2.29E-17 | C51 | 0.00E+00 | | |
| | C16 | 8.38E-14 | C34 | -5.39E-17 | C52 | 0.00E+00 | | |
| | C17 | -6.97E-14 | C35 | -4.83E-17 | C53 | 0.00E+00 | | |
| | C18 | 3.71E-13 | C36 | 3.04E-17 | C54 | 0.00E+00 | | |

## FIG. 10

| | Surface number | Shape | Refractive index | Abbe number | Eccentricity data | | | | | |
|---|---|---|---|---|---|---|---|---|---|---|
| | | | | | X | Y | Z | ADE | BDE | CDE |
| Display surface | 1 | | | | 0 | 0 | 0 | 0 | 0 | 0 |
| First mirror | 2 | Free curved surface | | | 1.974 | 42.957 | 159.941 | 6.038 | -0.987 | 1.869 |
| Second mirror | 3 | Free curved surface | | | -2.553 | 53.521 | -44.387 | 7.037 | -0.954 | 1.886 |
| Third mirror | 4 | Free curved surface | | | -0.351 | 113.835 | 152.493 | 2.039 | -1.115 | -6.192 |
| Fourth mirror | 5 | Free curved surface | | | -5.194 | 154.186 | -22.859 | 7.037 | -0.954 | -1.114 |
| Windshield | 6 | Free curved surface | | | 37.718 | 283.890 | 191.137 | 151.610 | -6.786 | 11.620 |
| Observer | 7 | | | | -90.330 | -54.129 | 941.523 | 151.610 | -6.786 | 11.620 |

EP 3 293 562 B1

# FIG. 11

| Surface number | Radius of curvature |
|---|---|
| 2 | -217.8 |
| 3 | 687.3 |
| 4 | -1039.5 |
| 5 | 2486.3 |
| 6 | -430.0 |

# FIG. 12

| Surface number | Polynomial coefficient | | | | | | | |
|---|---|---|---|---|---|---|---|---|
| 2 | C1 | 0.00E+00 | C19 | 0.00E+00 | C37 | 0.00E+00 | C55 | 0.00E+00 |
| | C2 | 0.00E+00 | C20 | 0.00E+00 | C38 | 0.00E+00 | C56 | 0.00E+00 |
| | C3 | 0.00E+00 | C21 | 0.00E+00 | C39 | 0.00E+00 | C57 | 0.00E+00 |
| | C4 | 1.24E-05 | C22 | 0.00E+00 | C40 | 0.00E+00 | C58 | 0.00E+00 |
| | C5 | 6.35E-05 | C23 | 0.00E+00 | C41 | 0.00E+00 | C59 | 0.00E+00 |
| | C6 | 2.03E-04 | C24 | 0.00E+00 | C42 | 0.00E+00 | C60 | 0.00E+00 |
| | C7 | -3.51E-08 | C25 | 0.00E+00 | C43 | 0.00E+00 | C61 | 0.00E+00 |
| | C8 | 1.87E-07 | C26 | 0.00E+00 | C44 | 0.00E+00 | C62 | 0.00E+00 |
| | C9 | 8.00E-08 | C27 | 0.00E+00 | C45 | 0.00E+00 | C63 | 0.00E+00 |
| | C10 | 5.42E-07 | C28 | 0.00E+00 | C46 | 0.00E+00 | C64 | 0.00E+00 |
| | C11 | 3.10E-10 | C29 | 0.00E+00 | C47 | 0.00E+00 | C65 | 0.00E+00 |
| | C12 | 9.09E-10 | C30 | 0.00E+00 | C48 | 0.00E+00 | C66 | 0.00E+00 |
| | C13 | 2.27E-09 | C31 | 0.00E+00 | C49 | 0.00E+00 | | |
| | C14 | 6.95E-10 | C32 | 0.00E+00 | C50 | 0.00E+00 | | |
| | C15 | 3.65E-10 | C33 | 0.00E+00 | C51 | 0.00E+00 | | |
| | C16 | 0.00E+00 | C34 | 0.00E+00 | C52 | 0.00E+00 | | |
| | C17 | 0.00E+00 | C35 | 0.00E+00 | C53 | 0.00E+00 | | |
| | C18 | 0.00E+00 | C36 | 0.00E+00 | C54 | 0.00E+00 | | |
| 3 | C1 | 0.00E+00 | C19 | 0.00E+00 | C37 | 0.00E+00 | C55 | 0.00E+00 |
| | C2 | 0.00E+00 | C20 | 0.00E+00 | C38 | 0.00E+00 | C56 | 0.00E+00 |
| | C3 | 0.00E+00 | C21 | 0.00E+00 | C39 | 0.00E+00 | C57 | 0.00E+00 |
| | C4 | -9.12E-04 | C22 | 0.00E+00 | C40 | 0.00E+00 | C58 | 0.00E+00 |
| | C5 | 1.98E-04 | C23 | 0.00E+00 | C41 | 0.00E+00 | C59 | 0.00E+00 |
| | C6 | -5.68E-04 | C24 | 0.00E+00 | C42 | 0.00E+00 | C60 | 0.00E+00 |
| | C7 | -1.13E-08 | C25 | 0.00E+00 | C43 | 0.00E+00 | C61 | 0.00E+00 |
| | C8 | -5.18E-06 | C26 | 0.00E+00 | C44 | 0.00E+00 | C62 | 0.00E+00 |
| | C9 | 8.58E-07 | C27 | 0.00E+00 | C45 | 0.00E+00 | C63 | 0.00E+00 |
| | C10 | -2.44E-06 | C28 | 0.00E+00 | C46 | 0.00E+00 | C64 | 0.00E+00 |
| | C11 | -7.28E-08 | C29 | 0.00E+00 | C47 | 0.00E+00 | C65 | 0.00E+00 |
| | C12 | 1.77E-08 | C30 | 0.00E+00 | C48 | 0.00E+00 | C66 | 0.00E+00 |
| | C13 | -1.09E-07 | C31 | 0.00E+00 | C49 | 0.00E+00 | | |
| | C14 | 1.09E-08 | C32 | 0.00E+00 | C50 | 0.00E+00 | | |
| | C15 | -4.83E-08 | C33 | 0.00E+00 | C51 | 0.00E+00 | | |
| | C16 | 0.00E+00 | C34 | 0.00E+00 | C52 | 0.00E+00 | | |
| | C17 | 0.00E+00 | C35 | 0.00E+00 | C53 | 0.00E+00 | | |
| | C18 | 0.00E+00 | C36 | 0.00E+00 | C54 | 0.00E+00 | | |

# FIG. 13

| Surface number | Polynomial coefficient | | | | | | | |
|---|---|---|---|---|---|---|---|---|
| 4 | C1 | 0.00E+00 | C19 | -2.13E-09 | C37 | 0.00E+00 | C55 | 0.00E+00 |
| | C2 | 0.00E+00 | C20 | -1.37E-09 | C38 | 0.00E+00 | C56 | 0.00E+00 |
| | C3 | 0.00E+00 | C21 | 1.86E-09 | C39 | 0.00E+00 | C57 | 0.00E+00 |
| | C4 | 1.54E-03 | C22 | 0.00E+00 | C40 | 0.00E+00 | C58 | 0.00E+00 |
| | C5 | 1.71E-04 | C23 | 0.00E+00 | C41 | 0.00E+00 | C59 | 0.00E+00 |
| | C6 | 1.32E-03 | C24 | 0.00E+00 | C42 | 0.00E+00 | C60 | 0.00E+00 |
| | C7 | 2.22E-06 | C25 | 0.00E+00 | C43 | 0.00E+00 | C61 | 0.00E+00 |
| | C8 | -1.11E-05 | C26 | 0.00E+00 | C44 | 0.00E+00 | C62 | 0.00E+00 |
| | C9 | 3.30E-06 | C27 | 0.00E+00 | C45 | 0.00E+00 | C63 | 0.00E+00 |
| | C10 | -2.59E-05 | C28 | 0.00E+00 | C46 | 0.00E+00 | C64 | 0.00E+00 |
| | C11 | 4.16E-08 | C29 | 0.00E+00 | C47 | 0.00E+00 | C65 | 0.00E+00 |
| | C12 | -4.41E-08 | C30 | 0.00E+00 | C48 | 0.00E+00 | C66 | 0.00E+00 |
| | C13 | 1.92E-07 | C31 | 0.00E+00 | C49 | 0.00E+00 | | |
| | C14 | -1.63E-08 | C32 | 0.00E+00 | C50 | 0.00E+00 | | |
| | C15 | 2.73E-07 | C33 | 0.00E+00 | C51 | 0.00E+00 | | |
| | C16 | -6.75E-11 | C34 | 0.00E+00 | C52 | 0.00E+00 | | |
| | C17 | -3.46E-10 | C35 | 0.00E+00 | C53 | 0.00E+00 | | |
| | C18 | 1.17E-09 | C36 | 0.00E+00 | C54 | 0.00E+00 | | |
| 5 | C1 | 0.00E+00 | C19 | 1.67E-12 | C37 | 0.00E+00 | C55 | 0.00E+00 |
| | C2 | 0.00E+00 | C20 | 8.55E-12 | C38 | 0.00E+00 | C56 | 0.00E+00 |
| | C3 | 0.00E+00 | C21 | 1.60E-11 | C39 | 0.00E+00 | C57 | 0.00E+00 |
| | C4 | 8.64E-04 | C22 | 0.00E+00 | C40 | 0.00E+00 | C58 | 0.00E+00 |
| | C5 | 3.56E-05 | C23 | 0.00E+00 | C41 | 0.00E+00 | C59 | 0.00E+00 |
| | C6 | 6.51E-04 | C24 | 0.00E+00 | C42 | 0.00E+00 | C60 | 0.00E+00 |
| | C7 | 7.33E-08 | C25 | 0.00E+00 | C43 | 0.00E+00 | C61 | 0.00E+00 |
| | C8 | -9.86E-07 | C26 | 0.00E+00 | C44 | 0.00E+00 | C62 | 0.00E+00 |
| | C9 | 7.08E-08 | C27 | 0.00E+00 | C45 | 0.00E+00 | C63 | 0.00E+00 |
| | C10 | -1.02E-06 | C28 | 0.00E+00 | C46 | 0.00E+00 | C64 | 0.00E+00 |
| | C11 | 1.19E-09 | C29 | 0.00E+00 | C47 | 0.00E+00 | C65 | 0.00E+00 |
| | C12 | -2.66E-10 | C30 | 0.00E+00 | C48 | 0.00E+00 | C66 | 0.00E+00 |
| | C13 | 1.12E-09 | C31 | 0.00E+00 | C49 | 0.00E+00 | | |
| | C14 | -6.46E-10 | C32 | 0.00E+00 | C50 | 0.00E+00 | | |
| | C15 | -1.75E-09 | C33 | 0.00E+00 | C51 | 0.00E+00 | | |
| | C16 | -2.76E-13 | C34 | 0.00E+00 | C52 | 0.00E+00 | | |
| | C17 | -4.54E-13 | C35 | 0.00E+00 | C53 | 0.00E+00 | | |
| | C18 | 2.76E-12 | C36 | 0.00E+00 | C54 | 0.00E+00 | | |

# FIG. 14

| Surface number | Polynomial coefficient | | | | | | | |
|---|---|---|---|---|---|---|---|---|
| 6 | C1 | 0.00E+00 | C19 | 1.51E-12 | C37 | 1.80E-21 | C55 | 0.00E+00 |
| | C2 | 1.93E-01 | C20 | 6.21E-12 | C38 | 1.60E-21 | C56 | 0.00E+00 |
| | C3 | 1.76E+00 | C21 | 1.00E-11 | C39 | -1.24E-20 | C57 | 0.00E+00 |
| | C4 | 8.25E-04 | C22 | 4.27E-15 | C40 | 7.84E-21 | C58 | 0.00E+00 |
| | C5 | -8.58E-06 | C23 | -3.90E-15 | C41 | -2.19E-20 | C59 | 0.00E+00 |
| | C6 | 3.26E-04 | C24 | 5.78E-15 | C42 | -5.71E-20 | C60 | 0.00E+00 |
| | C7 | 5.36E-08 | C25 | -1.46E-14 | C43 | 5.62E-20 | C61 | 0.00E+00 |
| | C8 | 5.80E-08 | C26 | 6.04E-15 | C44 | 8.07E-23 | C62 | 0.00E+00 |
| | C9 | 1.49E-07 | C27 | 4.91E-15 | C45 | -3.96E-21 | C63 | 0.00E+00 |
| | C10 | 1.14E-06 | C28 | -2.71E-14 | C46 | 0.00E+00 | C64 | 0.00E+00 |
| | C11 | 1.46E-09 | C29 | -1.11E-18 | C47 | 0.00E+00 | C65 | 0.00E+00 |
| | C12 | 1.16E-11 | C30 | 4.43E-18 | C48 | 0.00E+00 | C66 | 0.00E+00 |
| | C13 | 2.54E-09 | C31 | 3.85E-17 | C49 | 0.00E+00 | | |
| | C14 | -8.85E-10 | C32 | 9.94E-17 | C50 | 0.00E+00 | | |
| | C15 | -9.76E-10 | C33 | 2.29E-17 | C51 | 0.00E+00 | | |
| | C16 | 8.38E-14 | C34 | -5.39E-17 | C52 | 0.00E+00 | | |
| | C17 | -6.97E-14 | C35 | -4.83E-17 | C53 | 0.00E+00 | | |
| | C18 | 3.71E-13 | C36 | 3.04E-17 | C54 | 0.00E+00 | | |

# FIG. 15

| | | Example 1 | Example 2 |
|---|---|---|---|
| Virtual image size | X | 6000.0 | 6000.0 |
| | Y | 2250.0 | 2250.0 |
| Distance between observer and virtual image | | 30000.0 | 30000.0 |

**REFERENCES CITED IN THE DESCRIPTION**

**Patent documents cited in the description**

- US 5436763 A
- US 2009160736 A1
- US 2014126045 A1
- JP H08286140 A
- US 2014049819 A1
- JP 2008180759 A